# EUROPÄISCHE PATENTSCHRIFT

(11) **EP 1 402 768 B1**
(45) Veröffentlichungstag und Bekanntmachung des Hinweises auf die Patenterteilung: **02.08.2006**
(21) Anmeldenummer: 03102565.3
(22) Anmeldetag: 18.08.2003
(51) Int. Cl.: A01D 75/18, A01F 29/10, A01F 29/16

(54) **Nachweiseinrichtung zum Nachweis eines Gutstaus in einer Erntemaschine**
Detecting device to detect a jam in a harvesting machine
Dispositif de détection pour détecter un bourrage dans une machine de récolte

(30) Priorität: 06.09.2002 DE 10241216
(43) Veröffentlichungstag der Anmeldung: 31.03.2004
(73) Patentinhaber: DEERE & COMPANY, Moline, Illinois 61265-8098 (US)
(72) Erfinder: Clauss, Steffen, 66509, Rieschweiler-Mühlbach (DE)
(74) Vertreter: Holst, Sönke

(56) Entgegenhaltungen:
- DE-A- 19 918 552
- US-A- 5 083 976
- US-A- 5 787 694
- US-A1- 2002 091 476
- US-B1- 6 507 790

## Beschreibung

Die Erfindung betrifft eine Nachweiseinrichtung zum Nachweis eines Gutstaus in einer Erntemaschine.

In der DE 199 18 552 A wird eine Erntemaschine mit einer Erntegutaufnahmevorrichtung beschrieben, die mit einer verstellbaren, den Fluss des Ernteguts nach oben begrenzenden Niederhaltevorrichtung für das Erntegut ausgestattet ist. Im Falle eines Erntegutstaus, der durch einen Verstopfungssensor erkannt wird, wird die Niederhaltevorrichtung selbsttätig angehoben, um beim Reversieren das Ausstoßen des verstopften Ernteguts zu erleichtern. Der Verstopfungssensor erfasst das Antriebsmoment einer der Zuführwalzen oder der Häckseltrommel eines Feldhäckslers. In einer anderen Ausführungsform misst der Verstopfungssensor das Drehmoment an der Welle der oberen Schrägfördererwalze eines Mähdreschers. Die beschriebenen Verstopfungssensoren können zwar Verstopfungen innerhalb der Erntemaschine nachweisen, sind jedoch nicht eingerichtet, Verstopfungen des Erntevorsatzes zu detektieren.

In der nachveröffentlichten Europäischen Patentanmeldung EP 02100450.2 ist ein Erntevorsatz mit einem in den Antriebsstrang seiner Gutförderelemente eingefügten Drehmomentsensor beschrieben. Der Drehmomentsensor stellt ein Drehmomentsignal bereit, das einer Steuereinrichtung zugeführt wird, die es mit einem zulässigen Maximalwert vergleicht. Überschreitet das Drehmomentsignal den Maximalwert, wird der Antrieb des Erntevorsatzes selbsttätig abgeschaltet. Es ist hier, wie bei der Erntemaschine gemäß DE 199 18 552 A ein zusätzlicher Sensor vorgesehen, der elektrisch mit der Erntemaschine zu verbinden ist. Es ist somit ein gewisser Aufwand erforderlich, um einen Gutstau erkennen zu können.

Aus der US 5 070 682 A ist ein akustischer Detektor zum Fühlen von Luftschall bekannt geworden, der in den Gutzuführungsmechanismus eines Feldhäckslers eindringende Steine nachweisen soll. Dieser Detektor ist nicht zur Erkennung eines Gutstaus geeignet.

Das der Erfindung zu Grunde liegende Problem wird darin gesehen, eine verbesserte Vorrichtung zur Erkennung eines Gutstaus in einem Erntevorsatz oder einer Erntemaschine bereitzustellen, die sich durch geringen Aufwand und Zuverlässigkeit auszeichnet.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird vorgeschlagen, in den Antriebsstrang eines Gutförderelements der Erntemaschine eine Überlastkupplung einzufügen, die im Falle einer durch einen Gutstau bedingten Überschreitung eines festgelegten Drehmoments den Antriebsstrang auftrennt und akustische bzw. mechanische Schwingungen erzeugt. Die Nachweiseinrichtung ist mit einem Sensor ausgestattet, der gegebenenfalls diese Schwingungen empfängt und sie unter Verwendung einer geeigneten analogen und/oder digitalen Signalverarbeitung nachweist. Eine mit dem Sensor verbundene Steuerungseinrichtung kann den Bediener der Erntemaschine im Falle eines Gutstaus akustisch und/oder optisch informieren oder sogar selbsttätig geeignete Maßnahmen zur Beseitigung des Gutstaus durchführen, insbesondere den Antrieb des Gutförderelements abschalten, eine Niederhaltevorrichtung einer Pickup bzw. Haspel eines Schneidwerks anheben und/oder den Antrieb des Gutförderelements reversieren.

Auf diese Weise erhält man eine relativ einfach aufgebaute und preiswerte Nachweiseinrichtung für einen Gutstau. Es ist nur ein einziger Sensor erforderlich, der mit beliebig vielen Überlastkupplungen zusammenwirken kann.

Der Sensor ist vorzugsweise ein akustischer Sensor (Mikrofon), auf den die von der Überlastkupplung erzeugten Schwingungen durch Luftschall (akustisch) und/oder Körperschall (mechanisch) übertragen werden. Vorzugsweise findet ein kommerziell verfügbarer Klopfsensor Verwendung, wie er an Motoren zur Erkennung unerwünschter Klopfgeräusche benutzt wird. Ein derartiger Klopfsensor kann auch zur Steuerung anderer Elemente der Erntemaschine dienen, bei einem Feldhäcksler beispielsweise zur Einstellung des Abstands zwischen der Häckseltrommel und einer Gegenschneide. Auf derartige Klopfsensoren werden die von der Überlastkupplung erzeugten Schwingungen hauptsächlich mechanisch, d.h. durch Körperschall übertragen.

Ein Vorteil der erfindungsgemäßen Nachweiseinrichtung besteht darin, dass sie auch zur Erkennung eines Gutstaus in einem Erntevorsatz, beispielsweise einer Pick-Up oder einem Maisgebiss oder einem Schneidwerk oder Maispflücker eines Mähdreschers geeignet ist. Dazu wird die Überlastkupplung in den Antriebsstrang des Erntevorsatzes eingefügt. Die Überlastkupplung kann sich auf der Erntemaschine oder auf dem Erntevorsatz befinden. Der Sensor ist in der Regel an der Erntemaschine angebracht, was die Verlegung zusätzlicher Leitungen oder Bereitstellung einer drahtlosen Verbindung zum Erntevorsatz erspart, obwohl es auch möglich wäre, den Sensor am Erntevorsatz zu befestigen. Die von der Überlastkupplung erzeugten Schwingungen werden - in der Regel mechanisch - durch den Rahmen des Erntevorsatzes und über das Einzugsgehäuse auf die Erntemaschine übertragen, wo sie vom Sensor erfasst werden.

Als mechanische Überlastkupplung kommen alle Ausführungsformen in Frage, die beim Überschreiten eines festgelegten Drehmoments im Antriebsstrang nachweisbare Schwingungen erzeugen. Geeignet sind beispielsweise Nockenschaltkupplungen und Sternratschen.

In den Zeichnungen ist ein nachfolgend näher beschriebenes Ausführungsbeispiel der Erfindung dargestellt. Es zeigt:
- Fig. 1: eine Erntemaschine mit einer erfindungsgemäßen Nachweiseinrichtung in Seitenansicht und in schematischer Darstellung,
- Fig. 2: eine schematische Draufsicht auf die Antriebselemente der Erntemaschine,
- Fig. 3: ein Beispiel einer analogen Signalverarbeitungsschaltung der Nachweiseinrichtung und
- Fig. 4: einen Schnitt durch eine Überlastkupplung.

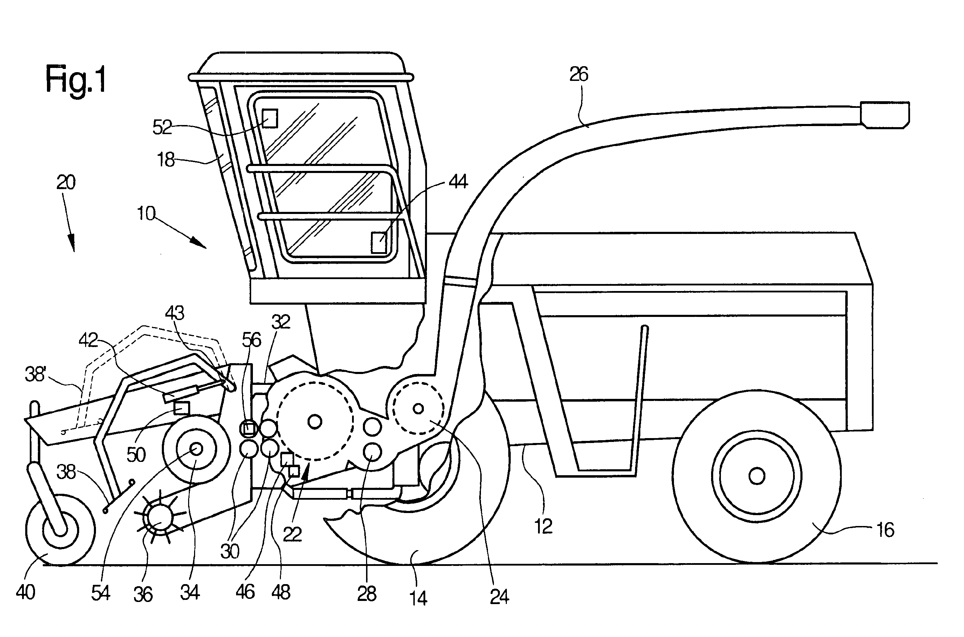

In der Figur 1 ist eine Erntemaschine in der Art eines selbstfahrenden Feldhäckslers 10 dargestellt, in der eine Nachweisvorrichtung zum Nachweis eines Gutstaus vorgesehen ist. Der Feldhäcksler 10 baut sich auf einem Rahmen 12 auf, der von vorderen und rückwärtigen Rädern 14 und 16 getragen wird. Die Bedienung des Feldhäckslers 10 erfolgt von einer Fahrerkabine 18 aus, von der aus eine Erntegutaufnahmevorrichtung 20 einsehbar ist. Mittels der Erntegutaufnahmevorrichtung 20 vom Boden aufgenommenes Gut, z. B. Mais, Gras oder dergleichen wird über Zuführwalzen 30, die innerhalb eines Einzugsgehäuses 32 angeordnet sind, einer Häckseltrommel 22 zugeführt, die es im Zusammenwirken mit einer Gegenschneide 46 in kleine Stücke häckselt und es einer Fördervorrichtung 24 aufgibt. Das Gut verläßt den Feldhäcksler 10 zu einem nebenherfahrenden Transportfahrzeug oder Anhänger über einen drehbaren Austragsschacht 26. Zwischen der Häckseltrommel 22 und der Fördervorrichtung 24 erstreckt sich eine Nachzerkleinerungsvorrichtung 28, durch die das zu fördernde Gut der Fördervorrichtung 24 tangential zugeführt wird.

Die Erntegutaufnahmevorrichtung 20 ist in diesem Ausführungsbeispiel als so genannte Pick-up ausgebildet und als selbstständige Einheit ausgestaltet. Allerdings könnte es sich bei dieser Erntegutaufnahmevorrichtung 20 ebenso um ein Zusatzaggregat handeln, das z.B. an den Frontbereich eines Schneidwerks eines Mähdreschers angeflanscht wird. Die Erntegutaufnahmevorrichtung 20 stützt sich bei der Feldarbeit über Stützräder 40 auf dem Erdboden ab. Die Aufgabe der Erntegutaufnahmevorrichtung 20 besteht darin, auf dem Boden in Schwaden abgelegtes Erntegut verschiedenster Art und Beschaffenheit aufzunehmen und es dem Feldhäcksler 10 zur weiteren Bearbeitung zuzuführen. Hierzu wird die Erntegutaufnahmeeinrichtung 20 während des Erntebetriebes mit geringem Abstand zum Erdboden über das Feld bewegt, während sie zum Transport auf einer Straße oder auf Wegen angehoben wird.

Zu der Erntegutaufnahmevorrichtung 20 gehört eine Fördervorrichtung 34 in Form einer Förderschnecke, die auf an sich bekannte Weise das aufgenommene Gut von den Seiten der Erntegutaufnahmevorrichtung 20 zu einer in der Mitte gelegenen, nicht gezeigten Abgabeöffnung fördert, hinter der die Zuführwalzen 30 folgen, ein wie die Fördervorrichtung rotativ angetriebenen Aufnehmer 36, der unterhalb der Fördervorrichtung 34 angeordnet ist und mit seinen Förderzinken das Gut vom Erdboden anhebt, um es der Fördervorrichtung 34 zu übergeben, und ein Niederhalter 38 in Form eines über dem Aufnehmer 36 angeordneten Bleches. Alternativ könnte der Niederhalter 38 walzenförmig sein oder mehrere Stäbe aufweisen. Die Drehachsen der Fördervorrichtung 34 und des Aufnehmers 36 verlaufen parallel zueinander und zum Erdboden und quer zur Fahrtrichtung des Feldhäckslers 10.

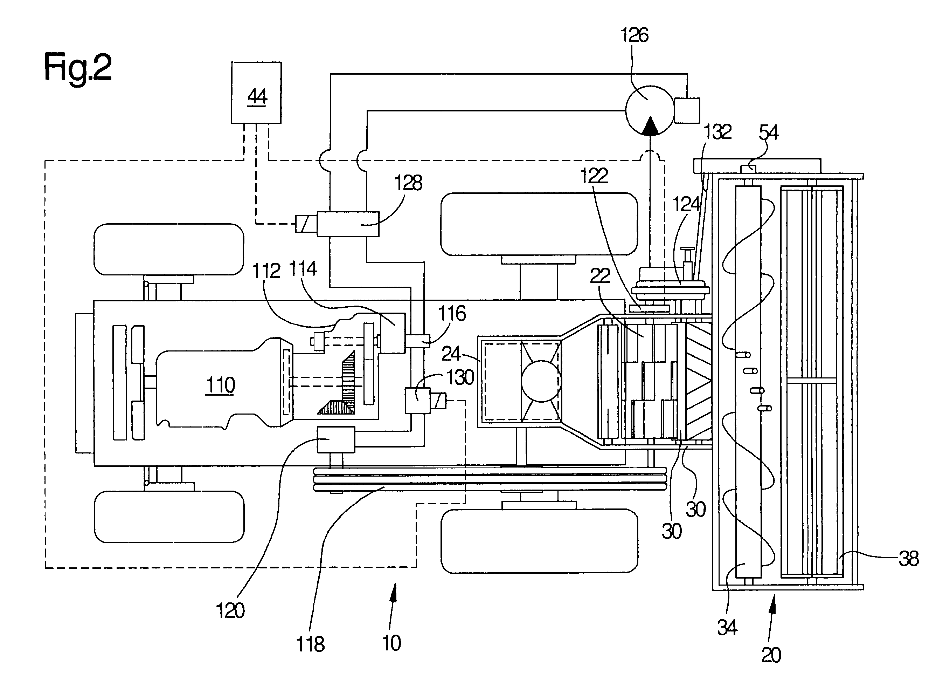

Die Fördervorrichtung 34 und der Aufnehmer 36 werden beim Erntebetrieb mechanisch durch den Verbrennungsmotor des Feldhäckslers 10 angetrieben, wie anhand der Figur 2 erkennbar ist, auf die nun Bezug genommen wird. Der Feldhäcksler 10 umfasst einen Verbrennungsmotor 110, der über ein Kegelradgetriebe 112 eine hydrostatische Pumpe 114 und eine hydraulische Hilfspumpe 116 antreibt. Das Kegelradgetriebe 112 treibt über eine hydraulisch betätigte und elektronisch gesteuerte Hauptkupplung 120 einen Antriebsriemen 118 an. Der Riemen treibt die Häckseltrommel 22 und das Gebläse 24 des Feldhäckslers 10 an. Der Antrieb der Häckseltrommel 22 ist außerdem über eine übliche elektrisch betätigbare Kupplung 122 mit einem Schnittlängengetriebe 124 für die Zuführwalzen 30 verbunden, das die Zuführwalzen 30 antreibt. Ein hydraulischer Reversiermotor 126 ist mit dem Schnittlängengetriebe 124 gekuppelt, um beim Reversieren die Zuführwalzen 30 anzutreiben. Der Reversiermotor 126 wird mit hydraulischem Druck gespeist, der von der Hilfspumpe 116 geliefert und dem Reversiermotor 126 über ein elektromagnetisch betätigtes Ventil 128 zugeführt wird. Ein elektromagnetisch betätigtes Ventil 130 steuert die Fluidverbindung zwischen der Pumpe 116 und der Hauptkupplung 120. Eine Steuerung 44 steuert die Ventile 128 und 130 sowie die Kupplung 122. Anzumerken ist, dass das Schnittlängengetriebe 124 in einer anderen Ausführungsform mit einem Planetengetriebe versehen sein kann, das mittels eines Hydraulikmotors eine stufenlose Einstellung der Schnittlänge von der Bedienerkabine 18 aus ermöglicht. Es wird diesbezüglich auf die Offenbarung der DE 198 12 500 A Bezug genommen.

Zum Antrieb der Erntegutaufnahmevorrichtung 20 dient eine abnehmbare Gelenkwelle 132, die sich zwischen dem Schnittlängengetriebe 124 und der Rückseite der Erntegutaufnahmevorrichtung 20 erstreckt. Über die Gelenkwelle 132 werden die Fördereinrichtung 34 und der Aufnehmer 36 angetrieben.

Die relative Lage der Fördervorrichtung 34 zum Aufnehmer 36 könnte unveränderlich sein, sie ist durch die Lagerung der Fördervorrichtung 34 an Hebelarmen jedoch in der Regel veränderbar. Die genannten Hebelarme auf beiden Seiten sind durch Federn belastet, um die Fördervorrichtung 34 auf das Gut zu drücken. Die Position des Niederhalters 38 kann zwischen der Betriebsstellung, in der der Niederhalter 38 in Figur 1 mit durchgehenden Linien gezeichnet ist, und in der der Niederhalter 38 mit dem Aufnehmer 36 zusammenwirkt, und einer Außerbetriebsstellung, in der der Niederhalter mit dem Bezugszeichen 38' gekennzeichnet ist, verstellt werden. Dazu dient ein Hydraulikzylinder 42 (der auch durch einen Elektomotor ersetzt werden könnte), der eingerichtet ist, den Niederhalter 38 entsprechend um eine horizontale, quer zur Fahrtrichtung des Feldhäckslers 10 verlaufende Achse 43 zu drehen. Die Außerbetriebsstellung des Niederhalters 38 erweist sich im Reversierbetrieb, in dem die Zuführwalzen 30, die Fördervorrichtung 34 und der Aufnehmer 36 (optional auch die Häckseltrommel 22) durch in gegenüber normalem Erntebetrieb umgekehrter Drehrichtung betrieben werden, als hilfreich, um verstopftes Material auswerfen zu können. Das Reversieren geschieht durch den hydraulischen Reversiermotor 132 am Schnittlängengetriebe 124. Auch wenn ein innerhalb einer der Zuführwalzen 30 angeordneter, nicht eingezeichneter Metalldetektor anspricht und den Antrieb der Zuführwalzen 30 abschaltet, ist ein Reversieren zweckmäßig.

Um den Niederhalter 38 selbsttätig zwischen der Betriebsstellung und der Außerbetriebsstellung bewegen und den Reversierbetrieb aktivieren zu können, ist die Steuerung 44 bereitgestellt. Sie ist (vorzugsweise über einen CAN-Bus) mit einem oder mehreren Klopfsensoren 48 an der Gegenschneide 46 und einem elektromagnetisch gesteuerten Ventil 50 verbunden, das die Beaufschlagung des Hydraulikzylinders 42 steuert. Der Klopfsensor 48 dient zum automatischen Einstellen des Abstands zwischen der Gegenschneide 46 und der Häckseltrommel 22, da er die beim Auftreffen der Messer der Häckseltrommel 22 auf die Gegenschneide 46 entstehenden Geräusche nachweist. Außerdem ist die Steuerung 44 ebenfalls über den CAN-Bus mit der Kupplung 124, den Ventilen 128 und 130 (s. Figur 2), einer Anzeigeeinrichtung 52 im Sichtbereich des Bedieners in der Fahrerkabine 18 und einem Drehmomentsensor 56 verbunden, der zur Messung des Drehmoments einer Zuführwalze 30 eingerichtet ist.

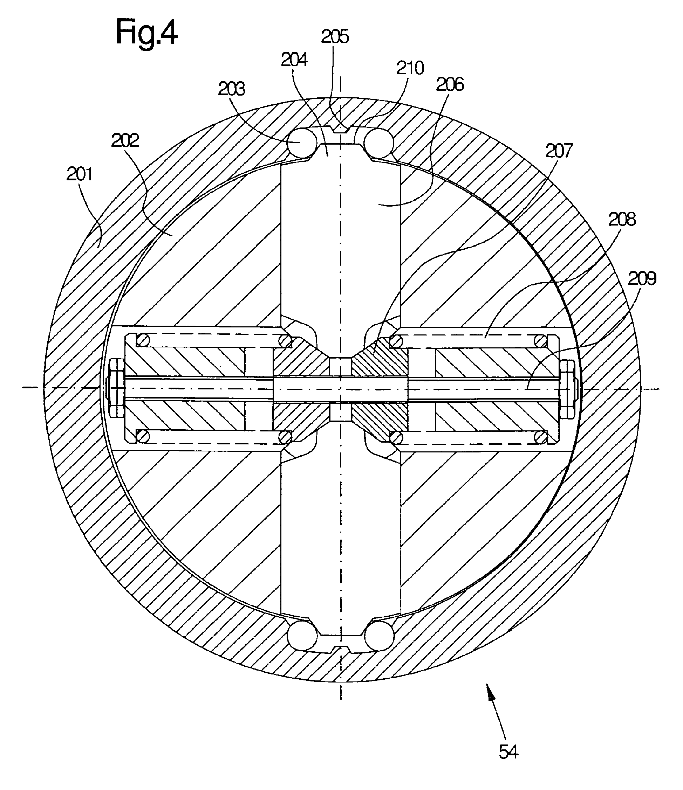

In den Antriebsstrang der Fördervorrichtung 34 ist zwischen der Fördervorrichtung 34 und der Gelenkwelle 132, die sie mit dem zu ihrem mechanischen Antrieb dienenden Schnittlängengetriebe 124 an der Seite des Einzugsgehäuses 32 des Feldhäckslers verbindet, eine Überlastkupplung 54 in Form einer Nockenschaltkupplung eingefügt. Eine Ausführungsform der Überlastkupplung wird weiter unten anhand der Figur 4 erläutert. Die Überlastkupplung 54 trennt den Antriebsstrang der Fördervorrichtung 34 auf, wenn das von der Überlastkupplung 54 übertragene Drehmoment einen festgelegten, durch die Überlastkupplung 54 bestimmten Grenzwert überschreitet. In einem derartigen Fall, der in der Regel durch einen Gutstau in der Fördervorrichtung 34 bedingt ist, der sich insbesondere durch eine übermäßige Menge an aufgenommenem Gut ergibt, erzeugt die Überlastkupplung 54 mechanische Schwingungen in Form eines Ratterns. Diese werden durch den Rahmen der Erntegutaufnahmeeinrichtung 20 und das Einzugsgehäuse 32 auf den Klopfsensor 48 übertragen.

Die Steuerung 44 ist eingerichtet, während des Erntebetriebs die Signale vom Klopfsensor 48 und vom Drehmomentsensor 56 zu überwachen. Weist das Signal des Drehmomentsensors 56 darauf hin, dass ein Schwellenwert überschritten ist, was auf einen Gutstau an den Zuführwalzen 30 deutet, wird über das Ventil 130 und die Hauptkupplung 120 der mechanische Antrieb der Häckseltrommel 22, der Zuführwalzen 30, der Fördervorrichtung 34 und des Aufnehmers 36 abgeschaltet, der Niederhalter 38 durch Betätigen des Ventils 50 angehoben und nach Ablauf einer vorbestimmten Zeitspanne reversiert, indem die Kupplung 122 aufgetrennt und über das Ventil 128 der Reversiermotor 126 aktiviert wird. Außerdem wird der Bediener über die Anzeigeeinrichtung 52 über den Gutstau informiert.

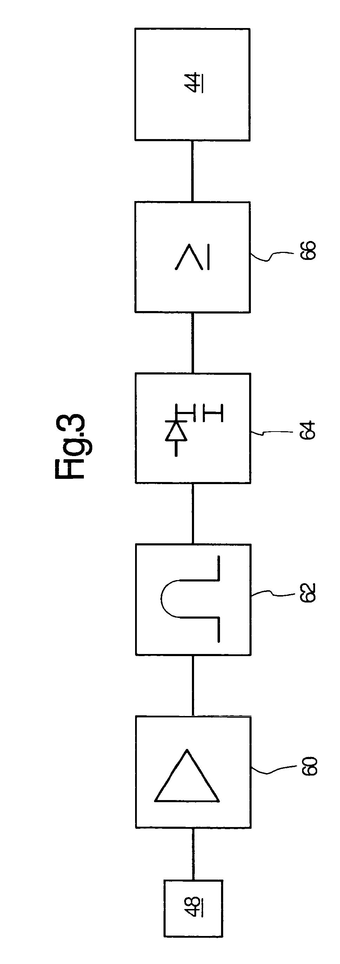

Analog wird verfahren, sobald der Klopfsensor 48 von der Überlastkupplung 54 erzeugte Signale empfängt. Dazu ist zwischen den Klopfsensor 48 und die (digitale) Steuerung 44 eine analoge Signalverarbeitungsschaltung geschaltet, wie sie in der Figur 3 dargestellt ist. Die Signalverarbeitungsschaltung umfasst einen Verstärker 68, dessen Eingang mit dem Klopfsensor 48 verbunden ist. Das verstärkte Signal wird einem Bandfilter 62 zugeführt, der nur Frequenzen durchlässt, wie sie durch die Überlastkupplung 54 im Klopfsensor 48 erzeugt werden. Die gefilterten Signale werden in einem Gleichrichter 64 gleichgerichtet und in einem Komparator 66 mit einem Vergleichswert verglichen. Der Komparator 66 führt der Steuerung 44 ein entsprechendes Signal zu, falls die Signale des Klopfsensors den Schwellenwert überschreiten, d.h. von einem Gutstau ausgegangen werden kann. Es wäre auch möglich, die in Figur 4 dargestellte analoge Signalverarbeitungsschaltung durch eine digitale Signalverarbeitung (die in Form eines in der Steuerung 44 laufenden Prozesses oder mittels einer externen Schaltung realisiert sein kann) zu ersetzen, der ein digitalisiertes Signal des Klopfsensors 48 zugeführt wird. Die digitale Signalverarbeitung könnte die Funktion der in Figur 3 dargestellten analogen Signalverarbeitungsschaltung ausführen, um das vom Klopfsensor 48 bereitgestellte Signalspektrum auf Frequenzen zu analysieren, die für eine ausgekoppelte Überlastkupplung 54 charakteristisch sind.

Weist das Ausgangssignal der Signalverarbeitung darauf hin, dass das Drehmoment der Überlastkupplung den Grenzwert überschritten hat, wird - wie im Fall eines Gutstaus der Zuführwalzen 30 - der normale Antrieb der Häckseltrommel 22, der Zuführwalzen 30, der Fördereinrichtung 34 und des Aufnehmers 36 abgeschaltet, der Niederhalter 38 angehoben, der Bediener über die Anzeigeeinrichtung 52 informiert und der Reversierbetrieb eingeleitet. Auch im Fall eines Ansprechens des Metalldetektors geht die Steuerung 44 entsprechend vor, d.h. sie schaltet die genannten Elemente ab, hebt den Niederhalter an und beginnt - nach einer zeitlichen Verzögerung - zu reversieren. Dadurch erreicht man, dass das Anheben des Niederhalters 38 zeitlich vor dem Einleiten des Reversierens liegt. Bei Gleichzeitigkeit kann es eventuell zu Verstopfern beim Reversieren kommen. Der Bediener kann den normalen Erntebetrieb manuell einleiten, nachdem der Gutstau behoben ist. Der normale Erntebetrieb kann nach einer bestimmten Reversierzeit auch selbsttätig durch die Steuerung 44 wieder aufgenommen werden. Anzumerken ist, dass das Signal des Klopfsensors 48 auch zum Nachweis des Vorhandenseins eines Gutflusses dienen kann, wie in der DE 102 11 800 offenbart.

In der Figur 4 ist eine Schnittzeichnung durch eine geeignete Überlastkupplung 54 in ihrer Drehmomentübertragungsposition dargestellt. Die dargestellte Überlastkupplung läuft nach Eintritt einer Überlastung mit einem verminderten Ratschenmoment um. Die in der Figur 4 dargestellte Überlastkupplung 54 besteht im wesentlichen aus einer Kupplungshülse 201, in der eine Kupplungsnabe 202 gehalten ist. In der Kupplungsnabe 202 sind Mitnehmerkörper 206 radial beweglich geführt und durch von Federn 208 nach innen beaufschlagte Stütznocken 207 radial nach außen gehalten. Die Kräfte der Federn 208 stützen sich an der radialen Außenseite gegen Endanschläge eines gemeinsamen Bolzens 209 ab, wodurch ein vollkommener Ausgleich der Federkräfte gegeben ist. In der Kupplungshülse 201 sind gleichmäßig auf dem Umfang verteilt Ausnehmungen 210 vorgesehen, in denen je zwei Wälzkörper 203 gehalten sind. Die Ausnehmungen 210 sind mit mittig angeordneten Nocken 205 versehen, die als Anschläge für die Wälzkörper 203 nach Eintritt eines Überlastungsfalles dienen, in dem die Wälzkörper 203 von den Kopfteilen 204 der Mitnehmerkörper 206 mitgenommen werden. Die in Umfangsrichtung wirksame Länge der Ausnehmungen 10 wird durch die Verschiebung eines der Wälzkörper 203 bis zum Nocken 205 soweit verringert, dass die Kupplung mit einem verminderten Ratschmoment umläuft. Durch Absenken der Drehzahl lässt sich ein Zustand erreichen, bei dem die Kopfteile 204 der Mitnehmerkörper 206 in der Lage sind, die aus ihren Endpositionen verschobenen Wälzkörper 203 in die Drehmomentübertragungsposition zurückzuschieben und damit den Kopfteilen 204 zu ermöglichen, die Drehmomentübertragungsposition zwischen zwei Wälzkörpern 203 wieder einzunehmen. Bei einer Überschreitung des vorgegebenen Drehmoments erzeugen die Mitnehmerkörper 206, die gegen die Wälzkörper 203 stoßen, Ratterschwingungen, die vom Klopfsensor 48 aufgenommen und von der Steuerung 44 nachgewiesen werden.

## Patentansprüche

1. Nachweiseinrichtung zum Nachweis eines Gutstaus in einer Erntemaschine (10), **dadurch gekennzeichnet, dass** in den Antriebsstrang eines Gutförderelements (34) der Erntemaschine (10) eine mechanische Überlastkupplung (54) eingefügt ist, die bei Überschreitung eines definierten Drehmoments akustische und/oder mechanische Schwingungen erzeugt, die durch einen Sensor der Nachweiseinrichtung nachweisbar sind.

2. Nachweiseinrichtung nach Anspruch 1, **dadurch gekennzeichnet, dass** der Sensor ein akustischer Sensor, insbesondere ein Klopfsensor (48) ist.

3. Nachweiseinrichtung nach Anspruch 1 oder 2, **dadurch gekennzeichnet, dass** das Ausgangssignal des Sensors auch zur Steuerung anderer Elemente der Erntemaschine (10) heranziehbar ist.

4. Nachweiseinrichtung nach einem der Ansprüche 1 bis 3, **dadurch gekennzeichnet, dass** der Sensor ein an der Gegenschneide (46) einer Häckseltrommel (22) angeordneter Klopfsensor (48) ist.

5. Nachweiseinrichtung nach einem der Ansprüche 1 bis 4, **dadurch gekennzeichnet, dass** die Überlastkupplung (54) in den Antriebsstrang einer Erntegutaufnahmevorrichtung (22) eingefügt ist.

6. Nachweiseinrichtung nach Anspruch 5, **dadurch gekennzeichnet, dass** die Überlastkupplung (54) an der Erntegutaufnahmevorrichtung (20) angeordnet ist, und dass sich der Sensor an der Erntemaschine (10) befindet.

7. Nachweiseinrichtung nach einem der Ansprüche 1 bis 6, **dadurch gekennzeichnet, dass** die Überlastkupplung (54) eine Nockenschaltkupplung ist.

## Claims

1. A detection arrangement for detecting a crop jam in a harvesting machine (10), **characterised in that** a mechanical overload clutch (54) is inserted into the drive train of a conveyor arrangement (34) of the harvesting machine (10) and when a defined torque is exceeded said clutch generates acoustic and/or mechanical vibrations, which can be detected by a sensor of the detection arrangement.

2. Detection arrangement according to Claim 1, **characterised in that** the sensor is an acoustic sensor, in particular a knock sensor (48).

3. Detection arrangement according to Claim 1 or 2, **characterised in that** the output signal of the sensor can also be used for controlling other elements of the harvesting machine (10).

4. Detection arrangement according to one of Claims 1 to 3, **characterised in that** the sensor is a knock sensor (48) arranged on the shear bar (46) of a chopper drum (22).

5. Detection arrangement according to one of Claims 1 to 4, **characterised in that** the overload clutch (54) is inserted into the drive train of a crop take-up arrangement (20).

6. Detection arrangement according to Claim 5, **characterised in that** the overload clutch (54) is arranged on the crop take-up arrangement (20), and that the sensor is located on the harvesting machine (10).

7. Detection arrangement according to one of Claims 1 to 6, **characterised in that** the overload clutch (54) is a cam-controlled clutch.

## Revendications

1. Dispositif de détection pour détecter un bourrage dans une machine de récolte (10), **caractérisé en ce qu'**un accouplement de surcharge (54) est intercalé dans la chaîne cinématique d'un élément de transport de récolte (34) de la machine de récolte (10), lequel, en cas de dépassement d'un couple défini, génère des vibrations acoustiques et/ou mécaniques qui peuvent être détectées par un détecteur du dispositif de détection.

2. Dispositif de détection suivant la revendication 1, **caractérisé en ce que** le détecteur est un détecteur acoustique, en particulier un détecteur piézo-électrique (48).

3. Dispositif de détection suivant la revendication 1 ou 2, **caractérisé en ce que** le signal de sortie du détecteur peut également être utilisé pour la commande d'autres éléments de la machine de récolte (10).

4. Dispositif de détection suivant l'une des revendications 1 à 3, **caractérisé en ce que** le détecteur est un détecteur piézo-électrique (48) disposé au contre-couteau (46) d'un tambour de hachage (22).

5. Dispositif de détection suivant l'une des revendications 1 à 4, **caractérisé en ce que** l'accouplement de surcharge (54) est intercalé dans la chaîne cinématique d'un dispositif de collecte de récolte (22).

6. Dispositif de détection suivant la revendication 5, **caractérisé en ce que** l'accouplement de surcharge (54) est disposé sur le dispositif de collecte de récolte (20) et **en ce que** le détecteur se trouve sur la machine de récolte (10).

7. Dispositif de détection suivant l'une des revendications 1 à 6, **caractérisé en ce que** l'accouplement de surcharge (54) est un embrayage à cames.
